# EUROPEAN PATENT APPLICATION

(11) **EP 0 644 690 A2**
(43) Date of publication of application: **22.03.1995**
(21) Application number: 94402000.7
(22) Date of filing: 08.09.1994
(51) Int. Cl.: H04N 5/76

(54) **VCR with camcorder station apparatus**

(30) Priority: 17.09.1993 KR 1888893
(71) Applicant: LG ELECTRONICS INC., Seoul (KR)
(72) Inventor: Hwang, Jeong Hwan, Seocho-Ku, Seoul (KR)
(74) Representative: Fort, Jacques

(57) **Abstract**

A station apparatus disposed in a VCR for reproducing a tape recorded by a camcorder through a TV set, including an engaging portion disposed in a VCR for receiving and supporting a camcorder, a plurality of audio/video signal terminals disposed at the bottom of an engaging portion of the VCR for receiving an output signal from the camcorder, a plurality of power terminals disposed at the bottom of the engaging portion of the VCR for transferring power to the camcorder, and audio/video cables for electrically connecting an output terminal with an input terminal of a TV set.

Thus, compared to conventional camcorder stations, file present invention gives not only equal performance and more convenient to use for various purposes but also high performance can be achieved at a low price.

## Description

### BACKGROUND OF THE INVENTION

### 1. Field of the Invention

The present invention relates in general to a camcorder station apparatus disposed in a VCR(Video Cassette Tape Recorder), and more particularly to a station apparatus capable of easily reproducing the tape recorded by the camcorder through the TV(Television) set without using an additionally separated station apparatus.

### 2. Description of the Conventional Art

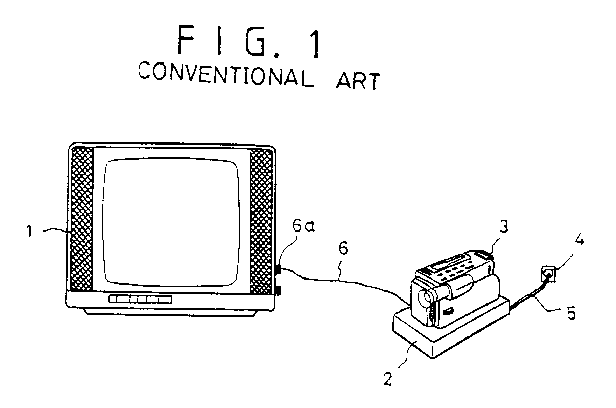

Conventionally, a camcorder station apparatus, as shown in Fig. 1, includes a station apparatus 2 with a function of transferring an output signal of the camcorder 3 to a TV set 1 upon a mode selection of the camcorder 3 for reproducing a tape recorded by the camcorder 3; an input terminal(not shown) of the station apparatus 2 for receiving power from the wall outlet 4 through a cable 5 for driving the station apparatus 2; and an input terminal 6a disposed at one side of the TV set for receiving the output signal from the output terminal(not shown) of the station apparatus through the cable 6.

The operation of the conventional camcorder station apparatus will be now described.

First, for reproducing a 8mm tape recorded by the camcorder 3 through the TV set, the camcorder is placed on an upper portion of the camcorder station apparatus 2, while the power and connecting terminals(not shown) disposed at the bottom of the camcorder 3 and the engaging portion(not shown) of the upper portion of the station apparatus 3 are electrically connected each other, so that it will be possible to watch the reproducing image through the TV set 1. At this time, the power supply for the station apparatus 2 is applied from the output terminal(not shown) of the station apparatus 2 through the wall outlet 4 and the cable 5. The power supply for the camcorder 3 is applied from the power terminal disposed at the upper portion of the station apparatus 2 through the power terminal at the bottom of the camcorder 3.

As described above, the conventional camcorder needs an additionally separated station apparatus for reproducing a tape recorded by the camcorder 3, additionally requiring a connecting cable 6 that electrically connects the TV set 1 and the station apparatus 2 and the cable 5 for connecting the wall outlet 4 and the station apparatus 2 and thus reproducing the tape recorded by the camcorder 3 is inconvenient for the user.

The disadvantages of the conventional station apparatus lie in that the range of its use is limited for only reproducing the tape recorded by the camcorder 3 despite its high price.

### SUMMARY OF THE INVENTION

Accordingly, it is an object of the present invention to provide a station apparatus disposed in a VCR capable of easily reproducing a tape recorded by the camcorder through the TV set without the use of a separate station apparatus.

It is another object of the present invention to provide a station apparatus disposed in a VCR capable of directly dubbing a tape recorded by a camcorder to a VHS(Video Home System) tape of a VCR by directly inputting the output signals of the camcorder to the VCR.

To achieve the object, the present invention includes an engaging portion disposed in a VCR for receiving and supporting a camcorder; a plurality of audio/video signal terminals disposed at the bottom of an engaging portion of the VCR for receiving an output signal of the camcorder; a plurality of power terminals disposed at the bottom of the engaging portion of the VCR for transferring power to the camcorder; and an audio/video cable for electrically connecting the output terminals with an input terminal of a TV set.

### BRIEF DESCRIPTION OF THE DRAWINGS

Fig. 1 is a perspective view showing a conventional camcorder station apparatus in which a camcorder is engaged, and the station apparatus is electrically connected to the TV set.

Fig. 2 is a perspective view showing a camcorder station apparatus disposed in a VCR according to the present invention.

Fig. 3 is a partial cross-sectional view showing a camcorder disposed into an inserting groove of the VCR according to the present invention.

Figs. 4A is a view showing the engaging portion of the bottom of the camcorder and Fig. 4B is a view showing the engaging portion of the VCR.

Fig. 5 is a cross-sectional view showing a lid engaged at the engaging portion of the VCR according to an embodiment of the present invention.

Fig. 6 is a cross-sectional view showing a lid engaged at the engaging portion of the VCR according to another embodiment of the present invention.

### PREFERRED EMBODIMENTS OF THE INVENTION

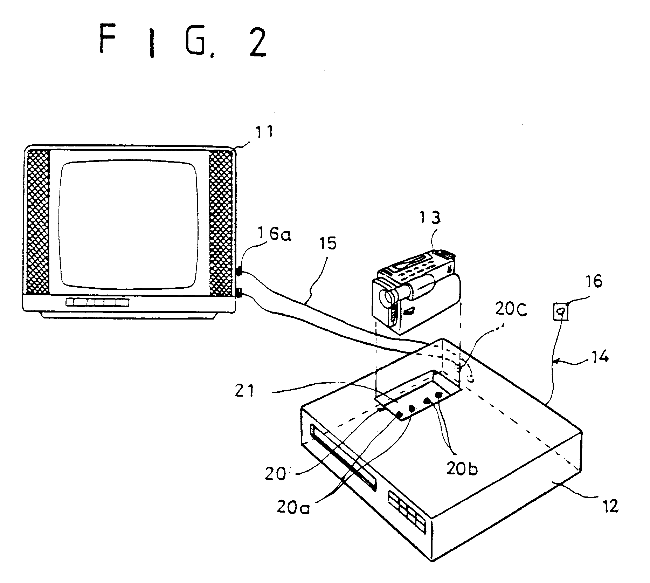

With reference to Fig. 2, there is shown a structure of a camcorder station apparatus disposed in a VCR according to the present invention. As shown there, it includes an engaging portion 20 disposed in the VCR for receiving a camcorder 13. The engaging portion 20 has a plurality of power terminals 20a and connecting terminals 20b for electrically connecting with a plurality of power terminals(not shown) and connecting terminals(not shown) disposed at the bottom of a camcorder 13, respectively. In addition, the connecting terminals 20b are electrically connected with the camcorder 13 as well as with the terminals(not shown) for receiving an audio/video signal in order to dub the tape recorded by the camcorder 13 to the VHS tape of the VCR 12. In addition, the power supply is supplied to the power terminals 20a through the cable 14. The output signals of the camcorder 13 are supplied to the output terminals 20c of the VCR 12 through the connecting terminals 20b of the VCR 12 which are electrically in contact with the connecting terminals(not shown) disposed at the bottom of the camcorder 13. The output signals of the camcorder 13 transferred to the output terminals 20c of the VCR 12 are transferred to the input terminal 16a of the TV set 11 through the audio/video cable 15, so that the tape recorded by the camcorder 13 is reproduced on the TV set 11.

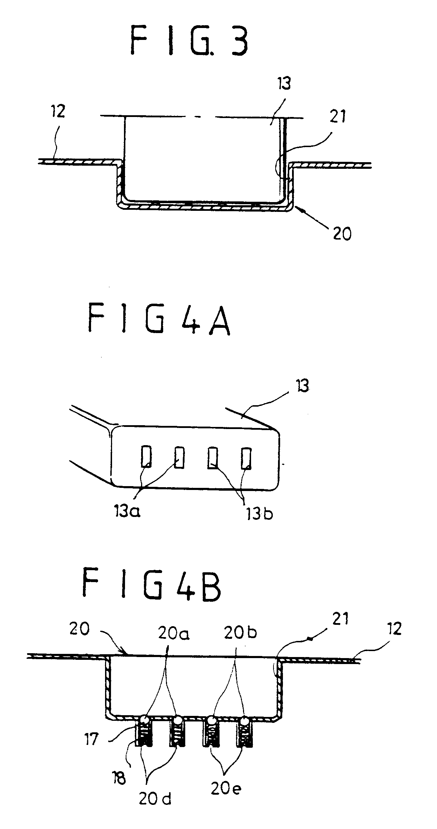

With reference to Fig. 3, there is shown a camcorder 13 inserted into the inserting groove 21 of the engaging portion 20 of the VCR 12. As shown there, a plurality of power terminals(not shown) and connecting terminals(not shown) disposed at the bottom of the camcorder 13 are respectively in electrical contact with a plurality of power terminals 20a and connecting terminals 20b which are disposed at the bottom of the inserting groove 21.

With reference to Figs. 4A and 4B, there are shown a plurality of power terminals 13a and connecting terminals 13b which are disposed at the bottom of the camcorder 13; an inserting groove 21 of an engaging portion 20 disposed at an upper portion of the VCR 12; and a plurality of power terminals 20a and connecting terminals 20b which are disposed at bottom of the inserting groove 21 of the VCR 12.

The power terminals 20a and connecting terminals 20b have a plurality of spring grooves 20d and 20e. The upper portion of the spring grooves 20d and 20e is opened and at each of the bottoms thereof are disposed a plurality of holes(not shown) having smaller diameter than that of the spring grooves 20d and 20e. In addition, inside the spring grooves 20d and 20e are respectively disposed springs 18, on each of which a plurality of metallic balls 17 are disposed. The springs 18 and the metallic balls 17 are electrically connected with each other. Here, the metallic balls 17 are tightly engaged at each of the upper portions of the springs 18. In addition, the bottom portion of the springs 18 are electrically connected with the output terminals 20C which are connected to the TV set 11 or the terminals(not shown) for receiving the audio/video signals from the outside for dubbing the tape recorded by the camcorder to the VHS tape. Here, the inner surface of the spring grooves 20d and 20e, the metallic balls 17 and the springs 18 are completely electrically cut from each other, so that any electric leakage can be avoided therebetween.

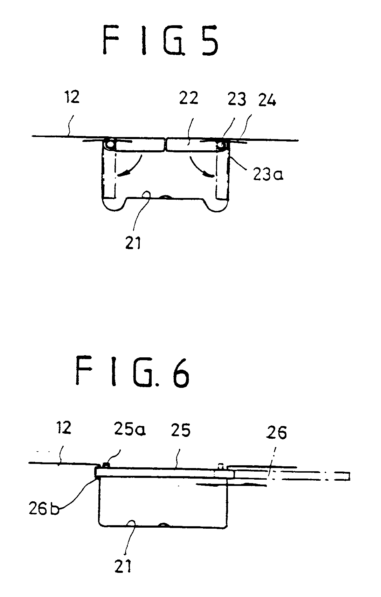

With reference to Figs. 5 and 6, there are shown lids disposed for covering the engaging portion of the VCR 12.

As shown in Fig. 5, it includes a plurality of hinge shafts 23a disposed at both sides of the inner upper portion of the inserting groove 21, respectively. At both hinge shafts 23a are disposed lids 22 covering the opening of the inserting groove 21. A spring 24 is disposed at the hinge shafts 23a to enable the lids 22 to cover the opening of the inserting groove 21 when the camcorder is disengaged therefrom by the recovering force of the spring 24. Here, both ends of the spring 24 are fixedly inserted into the VCR 12. As shown in Fig. 6,there is disposed a slide groove 26 having a predetermined width and length, which passes through the VCR 12. A lid 25 is slidably disposed into the slide groove 26. A handle 25a is disposed at one upper end portion of the lid 25. The groove 26 for receiving one end of the lid 25 is disposed at an inner upper portion of the inserting groove 21.

The operation of the camcorder station apparatus disposed in the VCR according to the present invention will now be explained with reference to Figs. 2 to 6.

First, the camcorder 13 is engaged at the engaging portion 20 disposed in the VCR 12. When the power switch of the camcorder 13 is turned on, it transfers the output signals to the TV set 11 for reproducing the tape recorded by the camcorder 13. In addition, upon a mode selection of the camcorder 13 by the user, the tape recorded by the camcorder 13 can be dubbed to the VHS tape by switching the connecting terminals 20b to the audio/video terminal of the VCR 12.

As a method of dubbing a tape recorded by the camcorder 13 to the VHS tape of the VCR, a manual or automatic switching method which can be installed at an upper portion of the inserting groove 21 of the VCR 12, so that upon engaging the camcorder 13 into the inserting groove 21 the tape recorded by the camcorder can be reproduced.

The effects of the camcorder station apparatus disposed in the VCR according to the present invention will now be explained.

Without using an additionally separated camcorder station apparatus for reproducing a tape recorded by the camcorder, an engaging portion disposed in the VCR is needed to engage the camcorder. In addition, it is possible to dub the tape recorded by the camcorder to the VHS tape by a user selection. When the camcorder station apparatus is not used, the camcorder batteries can be charged by just placing the camcorder into the engaging portion of the VCR.

## Claims

1. A camcorder station apparatus, comprising:
engaging means disposed in a VCR for receiving and supporting a camcorder;
a plurality of audio/video signal terminals disposed at a bottom of an inserting groove of the VCR for receiving an output signal of the camcorder;
a plurality of power terminals disposed at the bottom of the inserting portion of the VCR for transferring the power to the camcorder; and
an audio/video cable for electrically connecting an output terminal of the VCR with an input terminal of a TV set.

2. The apparatus of claim 1, wherein said engaging means includes an inserting groove disposed on the upper surface of a VCR for receiving a camcorder therein, and a plurality of metallic balls disposed on top of each of the springs each of which is inserted into spring grooves disposed at the bottom of the inserting portion.

3. The apparatus of claim 2, wherein said metallic balls are made of conductive materials.

4. The apparatus of claim 2, wherein said springs are made of conductive materials.

5. The apparatus of claim 2, wherein said inserting groove includes a lid means for covering the inserting groove.

6. The apparatus of claim 5, wherein said lid means is hinged at both sides of an upper portion of the inserting groove of the VCR and supported by an elastic material.

7. The apparatus of claim 5, wherein said lid means is engaged slidably into a groove disposed at an upper portion of the inserting groove of the VCR.
